Europäisches Patentamt

European Patent Office

Office européen des brevets

(11) Publication number: **0 064 173**
**B1**

(12) **EUROPEAN PATENT SPECIFICATION**

(45) Date of publication of patent specification: **07.11.84**

(51) Int. Cl.³: **B 23 Q 11/12**

(21) Application number: **82103052.5**

(22) Date of filing: **08.04.82**

(54) **Apparatus comprising a frame in which a shaft is rotatably supported.**

(30) Priority: **24.04.81 JP 63019/81**

(43) Date of publication of application:
**10.11.82 Bulletin 82/45**

(45) Publication of the grant of the patent:
**07.11.84 Bulletin 84/45**

(84) Designated Contracting States:
**DE FR GB**

(56) References cited:
**DE-A-2 724 440**
**FR-A-1 568 475**
**FR-A-2 239 150**
**FR-A-2 312 328**
**US-A-3 555 962**

(73) Proprietor: **MITSUBISHI DENKI KABUSHIKI KAISHA**
**2-3, Marunouchi 2-chome Chiyoda-ku Tokyo 100 (JP)**

(73) Proprietor: **NAKAMURA TOME PRECISION INDUSTRY CO., LTD.**
**No. 15, Netsuno- Machi, Tsurugi-machi Ishikawa Gun Ishikawa Prefecture (JP)**

(72) Inventor: **Inoue, Hitoshi**
**No. 232, Nishi-Jiyugaoka 2-chome, Shijimicho Miki-shi Hyogo-ken (JP)**
Inventor: **Yamakage, Hisaaki**
**No. 4, Mukoyutakamachi 3-chome Amagasaki-shi Hyogo-ken (JP)**
Inventor: **Katazawa, Kenji**
**211-1, Nagae 3-ku Toyama-shi Toyama-ken (JP)**
Inventor: **Miyamori, Chiaki**
**No. 195, Magae 3-chome, Kanazawa-shi Ishikawa-ken (JP)**

(74) Representative: **Liesegang, Roland, Dr.-Ing.**
**Sckellstrasse 1**
**D-8000 München 80 (DE)**

## Description

The present invention relates to an apparatus comprising a frame in which a shaft is rotatably supported in bearings, a driving motor mounted on the frame to rotate the shaft through pulleys on the shaft and the motor and belts being engaged around the pulleys.

Conventional mechanisms for driving a shaft include a driving motor which will be heated enough to give rise to a localized temperature rise in a frame adjacent to the driving motor. The locally heated portion of the frame tends to be deformed thereby causing the shaft to be inclined with respect to a base on which the frame is mounted. In case the shaft is of a machine tool, the machinery precision of the machine tool becomes worse according to this deformation.

In a known apparatus as mentioned above the shaft comprises a hollow tube, on an outer end of which ribs are arranged in a cooling air flow to thereby discharge heat (DE—A— 2 724 440).

It is known in the art to provide grooves in a bore of a frame housing a fixed bearing ring of a bearing supporting a shaft, a cooling fluid circulating through said grooves to discharge heat and thereby provide for thermal stability (FR—A—2 239 159).

It is the problem underlying the present invention to provide an apparatus as described initially in which the frame is prevented from being thermally deformed under the influence of the heat generated in the driving motor mounted on the frame.

According to the invention an apparatus as initially described additionally comprises a heat collector plate mounted between said driving motor and said frame having a cavity therein, a radiator and pipes connected between said cavity and said radiator to form a circuit in which after evacuation thereof a working fluid is charged.

The working fluid such as Freon is charged into the cavity of the collector plate, the radiator, and the pipes. The heat generated in the driving motor is transmitted by the working fluid from the collector plate to the radiator without being transmitted to the frame, so that the frame is prevented from being thermally deformed.

The above and other objects, features and advantages of the present invention will become more apparent from the following description when taken in conjunction with the accompanying drawings in which a preferred embodiment of the invention is shown by way of an illustrative example.

Fig. 1 is a vertical cross-sectional view of a conventional apparatus having a motor for driving a shaft:

Fig. 2 is a vertical cross-sectional view of a frame as thermally deformed of the apparatus shown in fig. 1; and

Fig. 3 is a vertical cross-sectional view of a shaft driving apparatus equipped with a device for preventing thermal deformation of the present invention, the device being shown diagrammatically.

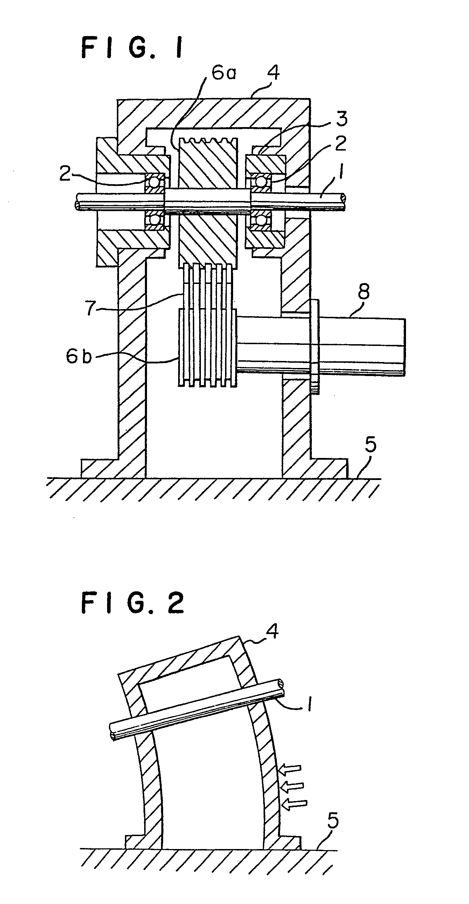

As shown in Fig. 1 an apparatus for rotating a shaft 1 comprises bearings 2 in which the shaft 1 is rotatably supported, bearing supports 3 in which the bearings 2 are mounted, a frame 4 on which the bearing supports 3 are disposed, a base 5 mounting thereon the frame 4, a pulley 6a fixed to the shaft 1, a driving motor 8 supported on the frame 4, a pulley 6b fixed to a shaft of the driving motor 8, and power transmission belts 7 wound around the pulleys 6a, 6b.

When the shaft of the driving motor 8 rotates, rotative power is transmitted from the pulley 6b through the belts 7 and the pulley 6a to the shaft 1, which is then rotated. The heat generated in the driving motor 8 is transmitted to the frame 4, which is then heated and from which the heat is discharged into the ambient air. Upon excessive heating of the driving motor 8, a portion of the frame 4 adjacent to the motor 8 is subjected to a localized temperature rise and becomes thermally expanded with the result that the frame 4 is thermally deformed as shown in Fig. 2. The arrows shown in Fig. 2 designate a direction and a position in which the heat is locally applied to the frame 4. The shaft 1 is thus caused by such frame deformation to be inclined with respect to the base 5. In case the shaft 1 is of a machine tool, such inclination of the shaft 1 adversely affects the machining precision of the machine tool.

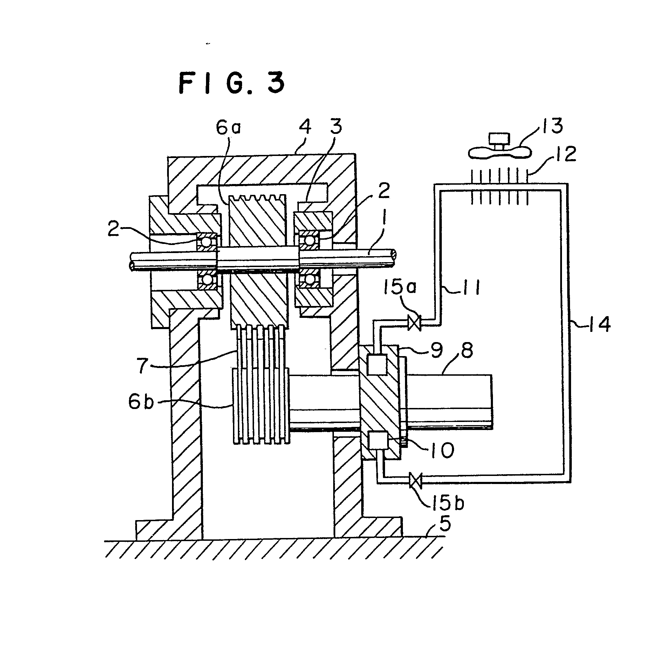

According to the present invention, a device for preventing thermal deformation is composed of such a shaft driving apparatus as illustrated in Fig. 3. The apparatus comprises a heat collector plate 9 installed between the driving motor 8 and frame 4 and having therein a cavity 10, a vapor pipe 11 leading from the cavity 10, a radiator 12 connected to the vapor pipe 11, a cooling fan 13 located adjacent to the radiator 12, and a liquid pipe 14 extending from the radiator 12 to the cavity 10 in the heat collector plate 9. The vapor pipe 11 and the liquid pipe 14 have valves 15a, 15b, respectively. The working fluid such as Freon is charged in the heat collector plate 9, the radiator 12, and the pipes 11, 14, after evacuation thereof.

The device for preventing thermal deformation operates as follows: When heat is generated in the driving motor 8 the heat collector plate 9 mounted on the driving motor 8 is heated to evaporate the working fluid into gas absorbing the heat from the driving motor 8 as latent heat of vaporization. The vapor of the working fluid flows to the radiator 12 through the vapor pipe 11 via the valve 15a under the pressure difference between the cavity 10 and the radiator 12. The vapor which has reached the radiator 12 is cooled by the ambient air forced by the cooling fan 13 to pass through the radiator 12, whereupon the vapor is condensed into liquid releasing the latent heat of vaporization into the ambient air. The condensed working fluid is circulated via the liquid pipe 14 through the valve 15b into the heat collector plate 9. Such a cycle of evaporation and condensation of the working fluid is repeated to transfer heat from the driving motor 8 to the radiator 12.

Accordingly, the heat generated in the driving motor 8 can be discharged outwardly into the ambient air without being transmitted to the frame 4, which is prevented from being heated and thermally deformed. The shaft 1 supported on the frame 4 is therefore rendered stable positionally. In case of a machine tool, it becomes possible to machine a workpiece with good precision.

Although a certain preferred embodiment of the invention has been shown and described in detail, it should be understood that various changes and modifications may be made therein without departing from the scope of the attached claims.

## Claims

1. Apparatus comprising a frame (4) in which a shaft (1) is rotatably supported in bearings, a driving motor (8) mounted on the frame to rotate the shaft (1) through pulleys (6a, 6b) on the shaft (1) and the motor (8) and belts (7) being engaged around the pulleys, characterized by: a heat collector plate (9) mounted between said driving motor (8) and said frame (4) having a cavity (10) therein, a radiator (12) and pipes (11, 14) connected between said cavity (10) and said radiator (12) to form a circuit in which after evacuation thereof a working fluid is charged.

2. Apparatus according to claim 1, characterized in that said working fluid comprises Freon.

## Patentansprüche

1. Vorrichtung mit einem Rahmen (4), in dem eine Welle (1) drehbar in Lagern abgestützt ist, einem an Rahmen angeordneten Antriebsmotor (8) zum Drehantrieb der Welle über auf der Welle (1) sitzende Riemenscheiben (6a, 6b) und diese umschlingende Riemen (7), gekennzeichnet durch: eine Wärmekollektorplatte (9), die zwischen dem Antriebsmotor (8) und dem Rahmen (4) angeordnet ist und einen Hohlraum (10) enthält, einen Radiator (12) und Leitungen (11, 14) zwischen dem Hohlraum (10) und dem Radiator (12) zum Bilden eines Kreislaufes, in welchen nach dem Evakuieren ein Arbeitsfluid eingefüllt ist.

2. Vorrichtung nach Anspruch 1, dadurch gekennzeichnet, daß das Arbeitsfluid Freon umfaßt.

## Revendications

1. Mécanisme comprenant un châssis (4) dans lequel un arbre (1) est supporté à rotation sur des roulements, un moteur d'entraînement (8) monté sur le châssis pour faire tourner l'arbre (1) par l'intermédiaire de poulies (6a, 6b) sur l'arbre (1) et sur le moteur (8), des courroies (7) passant sur les poulies, caractérisé par une plaque collectrice de la chaleur (9) montée entre ledit moteur d'entraînement (8) et ledit châssis (4) et pourvue d'une cavité (10), un radiateur (12) est des turbulures (11, 14) reliant ladite cavité (10) et ledit radiateur (12) pour former un circuit dans lequel, après mise sous vide de ce dernier, un fluide de travail est introduit.

2. Mécanisme selon la revendication 1, caractérisé en ce que ledit fluide de travail comprend le Fréon.

# FIG. 1

# FIG. 2

# FIG. 3